# EUROPÄISCHE PATENTSCHRIFT

(11) **EP 3 736 894 B1**
(45) Veröffentlichungstag und Bekanntmachung des Hinweises auf die Patenterteilung: **11.08.2021**
(21) Anmeldenummer: 20155267.6
(22) Anmeldetag: 04.02.2020
(51) Int. Cl.: H01M 8/0206, H01M 8/0213, H01M 8/0228, H01M 8/0254, H01M 8/0258, H01M 8/0265

(54) **BIPOLARPLATTE FÜR BRENNSTOFFZELLEN, BRENNSTOFFZELLENSTAPEL MIT SOLCHEN BIPOLARPLATTEN SOWIE FAHRZEUG MIT EINEM SOLCHEN BRENNSTOFFZELLENSTAPEL**
BIPOLAR PLATE FOR FUEL CELLS, FUEL CELL STACK COMPRISING SUCH BIPOLAR PLATES AND VEHICLE COMPRISING SUCH A FUEL CELL STACK
PLAQUE BIPOLAIRE POUR PILES À COMBUSTIBLE, EMPILEMENT DE PILES À COMBUSTIBLE DOTÉ DE TELLES PLAQUES BIPOLAIRES AINSI QUE VÉHICULE DOTÉ D'UN TEL EMPILEMENT DE PILES À COMBUSTIBLE

(30) Priorität: 17.04.2019 DE 102019205564
(43) Veröffentlichungstag der Anmeldung: 11.11.2020
(73) Patentinhaber: Audi AG, 85045 Ingolstadt (DE)
(72) Erfinder: Jilani, Adel, Burnaby, British Columbia V5J 5J8 (CA); Kumar, Sanjiv, Burnaby, British Columbia V5J 5J8 (CA); Bradean, Radu P., Burnaby, British Columbia V5J 5J8 (CA); Voigt, Sebastian, 74074 Heilbronn (DE)

(56) Entgegenhaltungen:
- DE-A1- 10 328 039
- DE-A1-102016 121 506
- DE-T5-112006 003 413
- US-A1- 2003 162 078

## Beschreibung

Die Erfindung betrifft eine Bipolarplatte für eine Brennstoffzelle umfassend eine Anodenplatte mit einer Anodenseite und einer Kühlmittelseite, wobei auf der Anodenseite eine erste Strukturierung zur Ausbildung eines Anoden-Flussfelds ausgebildet ist; eine Kathodenplatte mit einer Kathodenseite und einer Kühlmittelseite, wobei auf der Kathodenseite eine zweite Strukturierung zur Ausbildung eines Kathoden-Flussfelds ausgebildet ist; wobei zwischen der Anodenplatte und der Kathodenplatte zur Ausbildung eines Kühlmittel-Flussfelds Strukturelemente angeordnet sind. Weiterhin betrifft die Erfindung einen Brennstoffzellenstapel mit solchen Bipolarplatten sowie ein Fahrzeug, das einen solchen Brennstoffzellenstapel aufweist.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für membrane electrode assembly), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (stack) angeordneter MEA gebildet, deren elektrische Spannungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

Die Versorgung des Brennstoffzellenstapels mit seinen Betriebsmedien, also dem Anodenbetriebsgas (zum Beispiel Wasserstoff), dem Kathodenbetriebsgas (zum Beispiel Luft) und dem Kühlmittel, erfolgt über Hauptversorgungskanäle, die den Stapel in seiner gesamten Stapelrichtung durchsetzen und von denen die Betriebsmedien über die Bipolarplatten den Einzelzellen zugeführt werden. Für jedes Betriebsmedium sind mindestens zwei solcher Hauptversorgungskanäle vorhanden, nämlich einer zur Zuführung und einer zur Abführung des jeweiligen Betriebsmediums.

Typischerweise bestehen Bipolarplatten aus zwei miteinander verbundenen Halbplatten, die jeweils beidseitig strukturiert sind. Auf den voneinander abgewandten Seiten werden Strukturierungen zum Transport der Betriebsmedien und auf den zueinander zugewandten Seiten werden Strukturierungen zum Transport von Kühlmittel benötigt. Dabei müssen die Halbplatten jeweils aufeinander abgestimmt werden, da drei separate Transportwege mittels zweier Halbplatten zur Verfügung gestellt werden müssen. Das führt zu weiteren Randbedingungen, die die Flexibilität der Ausgestaltungen der Bipolarplatten reduziert. In typischen Ausführungen sind die Halbplatten bekannter Bipolarplatten profiliert ausgebildet, wobei die Profile ineinander eingreifen beziehungsweise verschachtelt sind.

Der Brennstoffzellenstapel weist an seinen gegenüberliegenden Stapelenden typischerweise Endplatten auf, welche mittels Spannvorrichtungen als Teil eines Spannsystems miteinander verbunden sind. Mittels der Spannvorrichtungen werden Zugkräfte übertragen, welche die Endplatten zueinander ziehen und die dazwischen angeordneten Einzelzellen verpressen, also gegeneinanderpressen. Teil des Spannsystems sind zudem Druckfedern, um den Stapel gleichmäßig zu belasten und Schädigungen an diesem zu vermeiden.

DE 103 28 039 A1 offenbart eine Bipolarplatte, die aus strukturierten Platten zusammengesetzt ist, welche im aktiven Bereich federelastisch verformbare Strukturelemente ausbilden. Im verbauten Zustand kommt es zu einer Druckaufnahme durch die Strukturelemente und ihre federelastische Verformung.

Der Erfindung liegt die Aufgabe zugrunde, eine Bipolarplatte bereitzustellen, welche die Nachteile einer Bipolarplatte, die diese in Verbindung mit Druckfedern aufweist, zumindest teilweise behebt.

Diese Aufgabe wird durch eine Bipolarplatte, einen Brennstoffzellenstapel sowie ein Fahrzeug mit einem solchen Brennstoffzellenstapel mit den Merkmalen der unabhängigen Ansprüche gelöst.

Die Bipolarplatte umfasst eine Anodenplatte mit einer Anodenseite und einer Kühlmittelseite, wobei auf einer Anodenseite eine erste Strukturierung zur Ausbildung eines Anoden-Flussfelds ausgebildet ist. Die Bipolarplatte umfasst ferner eine Kathodenplatte mit einer Kathodenseite und einer Kühlmittelseite, wobei auf der Kathodenseite eine zweite Strukturierung zur Ausbildung eines Kathoden-Flussfelds ausgebildet ist. Zwischen der Anodenplatte und der Kathodenplatte sind zur Ausbildung eines Kühlmittel-Flussfelds Strukturelemente angeordnet, die die Kühlmittelseiten der Anodenplatte und der Kathodenplatte kontaktieren. Erfindungsgemäß sind die Strukturelemente aus einem elastischen Material gefertigt und die Strukturelemente weisen im unverbauten Zustand der Bipolarplatte unterschiedliche Höhen auf in Abhängigkeit davon, in welchem Bereich des Kühlmittelflussfeldes diese angeordnet sind.

Die Druckbelastung der Bipolarplatte bzw. des oder der Flussfelder für die Reaktanden und das Kühlmittel ist nicht in allen Bereichen gleich, sondern unterscheidet sich u.a. in Abhängigkeit von der geometrischen Ausformung der Strömungspfade und deren Position zum Einström- oder Ausströmbereich des jeweiligen Flussfeldes.

Um diese Unterschiede zu kompensieren, sind die unterschiedlich hohen Strukturelemente bereichsweise angeordnet, wobei in Bereichen mit geringerer Druckbelastung diese eine größere Höhe aufweisen, als die Strukturelemente in anderen Bereichen mit einer höheren Druckbelastung.

Erfindungsgemäß kann eine Vielzahl von Bereichen gegeben sein, die mit unterschiedlich hohen Strukturelementen versehen werden können. Dies hängt von der spezifischen Ausgestaltung der jeweiligen Bipolarplatte ab.

Nach einer bevorzugten Ausführungsform der Erfindung sind drei Bereiche vorgesehen, nämlich ein Einströmungsbereich, ein Ausströmungsbereich und ein Übergangsbereich vom Einströmungsbereich zum Ausströmungsbereich des Flussfeldes, wobei sich die Höhe der Strukturelemente vom Einströmungsbereich zum Ausströmungsbereich vergrößert.

Die Strukturelemente kontaktieren in Abhängigkeit von ihrer Höhe Kathodenplatte und/oder Anodenplatte, wobei im verbauten Zustand in einem Brennstoffzellenstapel von allen Strukturelementen Kathodenplatte und Anodenplatte kontaktiert sind, da dieser verspannt ist.

Diese Strukturelemente dienen als eingebettete Federn in einem Brennstoffzellenstapel mit den erfindungsgemäßen Bipolarplatten unter anderem zur Optimierung der Kompression bei gleichzeitiger Erhöhung einer strukturellen Robustheit.

Zudem kann dadurch die Stapelhöhe des Brennstoffzellenstapels im Vergleich zum Stand der Technik reduziert werden, da die üblicherweise verwendeten Druckfedern verzichtbar sind. Diese Druckfedern nach dem Stand der Technik bieten zudem keine gute Kontrolle des Anpressdrucks auf die aktive Fläche der Bipolarplatte, wobei es durch die daraus resultierende ungleichmäßige Stapelverdichtung zu Plattenbruch führen kann. Dies wird durch die erfindungsgemäße Bipolarplatte vermieden. Zudem kann durch den Verzicht auf Druckfedern Gewicht eingespart werden. Auch eine Durchbiegung der Endplatte wird minimiert. Besonders vorteilhaft ist zudem, dass die Auswirkungen des Eindringens von GDL/MEA minimiert werden können.

Ferner kann eine Kostenreduzierung bei der Plattenherstellung realisiert werden, beispielsweise durch den Verzicht auf die Druckfedern und durch die Möglichkeit, das Form-In-Place (FIP)-Verfahrens zur Großserienfertigung einzusetzen.

Die erfindungsgemäße Bipolarplatte, abgesehen von den Strukturelementen, besteht vorzugsweise aus einem leitfähigen Material, vorzugsweise kohlenstoffbasierten Material, vorzugsweise Graphit oder einem Kompositmaterial aus Graphit und Kohlenstoff. Auch der Einsatz von Metall ist vorgesehen.

Die erfindungsgemäß vorgesehenen Strukturelemente bestehen vorzugsweise aus einem elastischen, vorzugsweise elektrisch leitfähigen Polymer, das in dem Temperaturbereich des Brennstoffzellenbetriebs stabil ist, wobei vorzugsweise zumindest ein Strukturelement leitfähig ist.

Vorzugsweise bestehen alle Strukturelemente aus dem gleichen Material, so dass Federeigenschaften der Strukturelemente, abgesehen von der Auswahl des Materials, durch deren Höhe eingestellt werden.

Die Höhen der unterschiedlichen Strukturelemente ergeben sich durch die spezifischen Anforderungen im jeweiligen Bereich.

Beispielhaft kann bei einer Höhe der Bipolarplatte von 1140 um und eine Höhe des Kühlmittelflussfeldes von 440 um von einer Höhe der Strukturelemente von 440 um, 420 um und 400 um und einer Breite von 500 um ausgegangen werden. Die Höhe der ersten und der zweiten Strukturierung werden unabhängig von den Höhen der Strukturelemente bestimmt. Diese können im Bereich von 125 um bis 225 um liegen.

Vorzugsweise werden Silicone bzw. Siloxane verwendet, wobei Polydimethylsiloxan besonders bevorzugt ist.

Das Polymer weist vorzugsweise eine elektrische Leitfähigkeit von >100 S/cm auf. Ein elektrischer Widerstand liegt vorzugsweise bei 0,0008 Ω cm und das Kompressionsmodul vorzugsweise bei 5 MPa.

Die Strukturelemente sind zwischen Anodenplatte und Kathodenplatte von einander beabstandet angeordnet, so dass das Kühlmittel mit möglichst geringen Druckverlusten das Kühlmittel-Flussfeld der Bipolarplatte durchströmen kann.

Die Strukturelemente sind dazu säulenförmig ausgestaltet, vorzugsweise mit einem gleichbleibenden Querschnitt über die gesamte Länge des einzelnen Strukturelements oder auch mit einem über die Länge variierenden Querschnitt, beispielsweise mit einem reduzierten Querschnitt in der Mitte der Strukturelemente.

Die Strukturelement können unterschiedlich große Querschnittsflächen verteilt über die Fläche der Bipolarplatte aufweisen, um unterschiedlichen Anforderungen an die Federkraft in unterschiedlichen Bereichen der Bipolarplatte gerecht zu werden.

Vorzugsweise weisen die Strukturelemente einen rechteckigen oder quadratischen Querschnitt auf, so dass eine sehr einfache Fertigung möglich ist. Bevorzugt sind auch runde oder ovale Querschnitte mit einer oder zwei Symmetrieachsen.

Nach besonders bevorzugten Ausführungsformen der erfindungsgemäßen Bipolarplatte sind die Strukturierungen der Anodenplatte und der Kathodenplatte derart ausgestaltet, dass zumindest die Kontaktfläche der Strukturelemente auf den jeweils anderen Seiten von Anodenplatte und Kathodenplatte von den Strukturierungen zumindest teilweise überdeckt wird, um den Druck über die gesamte Stapelhöhe zu verteilen.

Somit werden die erste Strukturierung der Anodenseite und die zweite Strukturierung der Kathodenplatte sowie die Strukturelemente in Stapelrichtung der Bipolarplatten direkt übereinander angeordnet. Vorteilhafterweise können so Beschädigungen der Bipolarplatte vermieden werden.

Darüberhinausgehende räumliche Ausgestaltungen der Strukturierungen von Anodenplatte und Kathodenplatte sind zur Optimierung der Strömungsverhältnisse problemlos möglich. Bevorzugt ist eine äquivalente Ausgestaltungen wie die der Strukturelemente.

Auch das Mischen von Strukturelementen mit unterschiedlichen Querschnitten ist erfindungsgemäß möglich.

Die Strukturelemente können unter Ausbildung von Strömungsbereichen regelmäßig oder unregelmäßig im Kühlmittelflussfeld angeordnet sein, um Druckverluste zu vermeiden und die notwendige Federkraft bedarfsorientiert einzusetzen. Bevorzugt bilden die Strukturelemente und optional die Strukturierungen bei regelmäßiger Anordnung ein Gittermuster aus.

Die Strukturelemente sind vorzugsweise an zumindest der Anodenplatte oder der Kathodenplatte fixiert, beispielsweise durch Verkleben, wobei eine einseitige Fixierung die Montage der Bipolarplatten erleichtern kann und im allgemeinen ausreicht. Bevorzugt ist hierbei das Fixieren mit der das Oxidationsmittel führenden Kathodenplatte.

Nach einer besonders bevorzugten Ausführungsform der erfindungsgemäßen Bipolarplatte werden die Strukturelement auf zumindest einer Trägerplatte angeordnet bereitgestellt. Diese zumindest eine Trägerplatte besteht vorzugsweise aus demselben Material, wie die Strukturelemente und ist vorzugsweise einstückig mit den Strukturelementen hergestellt.

Es können alle Strukturelemente auf einer Trägerplatte angeordnet sein oder aber auch, je nach Bereich auf unterschiedlichen Trägerplatten, d.h. alle Strukturelemente einer Höhe sind auf einer separaten Trägerplatte befindlich. Dadurch kann vorteilhafterweise der Fertigungsaufwand reduziert werden.

Die Trägerplatte kann entweder an der Anodenplatte oder an der Kathodenplatte anliegend angeordnet sein. Diese vorteilhafte Ausgestaltung ermöglicht eine wesentlich vereinfachte Montage der erfindungsgemäßen Bipolarplatte. Auch bei dieser Ausführungsform kann eine Verklebung mit zumindest der Anodenplatte und der Kathodenplatte analog einzelnen Strukturelementen erfolgen.

Abgesehen von den vorab beschriebenen Vorgaben können die Flussfelder der Anodenplatte und der Kathodenplatte sowie das Kühlmittelflussfeld unabhängig voneinander individuell ausgestaltet werden.

Ein weiterer Aspekt der Erfindung betrifft einen Brennstoffzellenstapel, der einen Stapel zwischen zwei Endplatten abwechselnd angeordneter Membran-Elektroden-Anordnungen und erfindungsgemäßen Bipolarplatten umfasst.

Ferner betrifft die Erfindung ein Fahrzeug, das ein Brennstoffzellensystem mit einem erfindungsgemäßen Brennstoffzellenstapel aufweist. Bei dem Fahrzeug handelt es sich vorzugsweise um ein Elektrofahrzeug, bei dem eine von dem Brennstoffzellensystem erzeugte elektrische Energie der Versorgung eines Elektrotraktionsmotors und/oder einer Traktionsbatterie dient.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Brennstoffzellenstapels;
- Figur 2: in perspektivischer Ansicht ein Detail einer erfindungsgemäßen Bipolarplatte,
- Figur 3: in einer Schnittansicht das Detail der Bipolarplatte nach Figur 2,
- Figur 4: in einer Schnittansicht ein Detail einer Bipolarplatte nach einer zweiten Ausführungsform,
- Figur 5: in perspektivischer Ansicht ein Detail einer Kathodenplatte mit auf einer Trägerplatte angeordneten Strukturelementen,
- Figur 6: in einer Aufsicht Strukturelemente mit ovalem Querschnitt auf einer Trägerplatte, und
- Figur 7: in einer Aufsicht Strukturelemente mit ovalem Querschnitt auf einer Trägerplatte nach einer zweiten Ausführungsform.

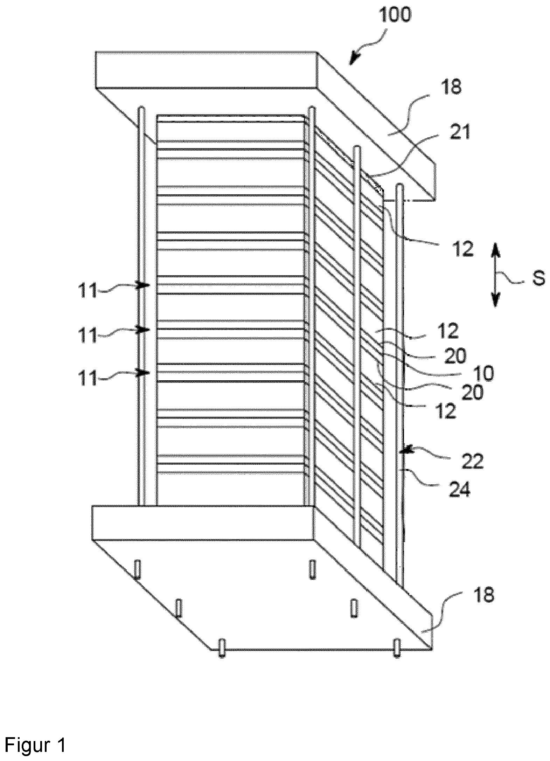

Figur 1 zeigt in einer schematischen Darstellung einen insgesamt mit 100 bezeichneten Brennstoffzellenstapel gemäß der vorliegenden Erfindung. Der Brennstoffzellenstapel 100 ist Teil eines nicht weiter dargestellten Fahrzeugs, insbesondere eines Elektrofahrzeugs, das einen Elektrotraktionsmotor aufweist, der durch den Brennstoffzellenstapel 100 mit elektrischer Energie versorgt wird.

Der Brennstoffzellenstapel 100 umfasst eine Vielzahl von abwechselnd, an deren Flachseiten aneinandergereihten (gestapelten) Membran-Elektroden-Anordnungen 10 und Bipolarplatten 12. Insgesamt bilden also mehrere gestapelte Einzelzellen 11 den Brennstoffzellenstapel 100, wobei sowohl eine der Einzelzellen 11, als auch der Brennstoffzellenstapel 100 allgemein als Brennstoffzelle bezeichnet werden können. Der Brennstoffzellenstapel 100 weist beidendseitig Endplatten 18 auf. Zwischen den Bipolarplatten 12 und den jeweiligen Membran-Elektroden-Anordnungen 10 sind nicht dargestellte Anoden- und Kathodenräume angeordnet, welche von umlaufenden Dichtungen 20 begrenzt werden. Unter anderem, um die Dichtfunktion der Dichtungen 20 herzustellen, wird der Brennstoffzellenstapel 100 in der Stapelrichtung S mittels eines Spannsystems zusammengepresst (verpresst).

Das Spannsystem umfasst eine äußere Spannvorrichtung 22, sowie hier nicht sichtbare elastische Strukturelemente, die im Kühlmittelbereich der Bipolarplatten 12 angeordnet sind. Diese werden nachstehend noch näher beschrieben.

Zum Aufbau einer äußeren Spannung, welche auf die Strukturelemente im Brennstoffzellenstapel 100 übertragen wird, leiten längliche Zugkörper 24 der äußeren Spannvorrichtungen 22 Zugkräfte zwischen den beiden Endplatten 18 weiter, sodass die Endplatten 18 mittels der Zugkörper 24 zueinander gezogen werden. Dazu erstrecken sich die Zugkörper 24 in einer Stapelrichtung S des Brennstoffzellenstapels 100.

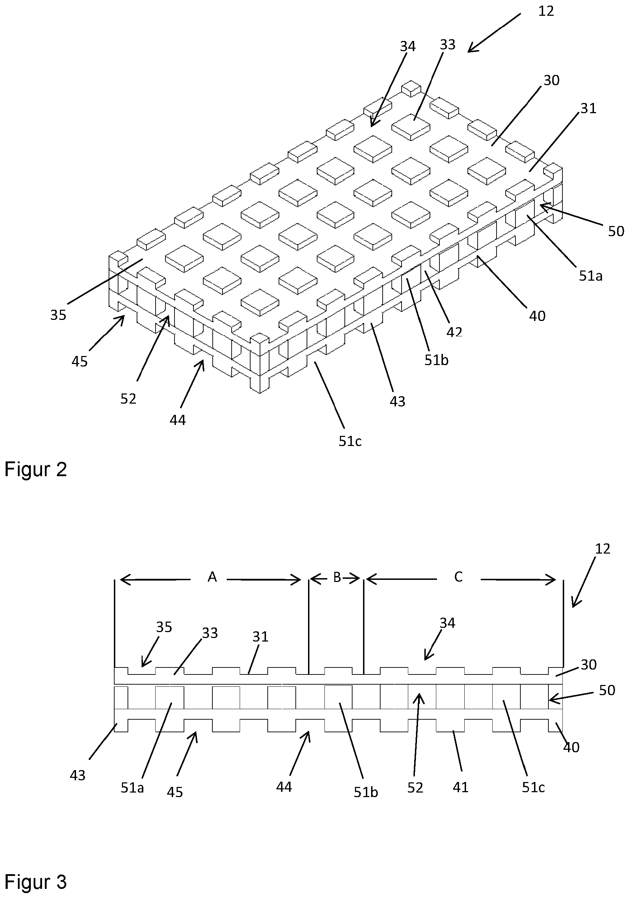

Figuren 2 und 3 zeigen eine erfindungsgemäße Bipolarplatte 12 nach einer ersten Ausführungsform in unterschiedlichen Ansichten. Dargestellt ist jeweils ein Detail der Bipolarplatte 12.

Die Bipolarplatte 12 umfasst hierbei zwei Einzelplatten, eine Anodenplatte 30 sowie eine Kathodenplatte 40. Die Anodenplatte 30 weist eine Anodenseite 31 und eine Kühlmittelseite 32 auf, die zur Kathodenplatte 40 weist. Die Kathodenplatte 40 weist eine Kathodenseite 41 und eine zur Anodenplatte 30 weisende Kühlmittelseite 42 auf. Zur Ausbildung eines Kühlmittelflussfeldes 50 sind zwischen der Anodenplatte 30 und der Kathodenplatte 40, jeweils auf der Kühlmittelseite 32, 42, elastische Strukturelemente 51a, 51 b, 51c angeordnet, die eine unterschiedliche Höhe h aufweisen. Im Einströmbereich A für das Kühlmittel ist die Höhe h der Strukturelemente 51a, geringer als die der Strukturelemente 51c im Ausströmbereich C, und im Übergangsbereich B liegt die Höhe h der Strukturelemente 51b zwischen denen der anderen Strukturelemente 51a und 51c.

Im unverbauten Zustand kontaktieren nur die Strukturelemente 51c im Auströmbereich C die Anodenplatte 30 und die Kathodenplatte 40.
Im verbauten Zustand kontaktieren alle Strukturelemente 51a, 51b, 51c die Anodenplatte 30 und die Kathodenplatte 40, da der entsprechende Brennstoffzellenstapel 100 verspannt ist, so eine Höhendifferenz zwischen den Strukturelementen 51a, 51b, 51c ausgeglichen wird.

Die Strukturelemente 51a, 51b, 51c sind säulenförmig und weisen einen quadratischen Querschnitt auf. Diese sind gleichmäßig verteilt und bilden somit Strömungspfade 52 in Form eines Gitternetzes aus, die von einem Kühlmittel in Längs- und Querrichtung bezogen auf eine Hauptachse der Bipolarplatte 12 durchströmt werden können.

Auf der vom Kühlmittelflussfeld 50 abgewandten Anodenseite 31 und Kathodenseite 41 sind eine erste Strukturierung 33 bzw. eine zweite Strukturierung 43 vorgesehen, die beide analog zu den Strukturelementen 51a, 51b, 51c des Kühlmittelflussfeldes 50 ausgestaltet sind und ein Anodenflussfeld 34 und ein Kathodenflussfeld 44 ausbilden. D.h. diese sind säulenförmig mit einem quadratischen Querschnitt. Zudem bilden sie Strömungspfade 35, 45 für die beiden Reaktionsmedien aus, wobei diese in den Figuren 2 bis 4 in Stapelrichtung S mit den Strukturelementen 51a, 51b, 51c deckungsgleich sind.

Die abweichenden Größen der Strukturelemente 51a, 51b, 51c im Zentrum der Kathodenplatte 40 im Gegensatz zu denen an den Rändern ist lediglich auf den gezeigten Ausschnitt der Biopolarplatte 12 zurückzuführen und hat keine technische Bedeutung. Wobei es natürlich grundsätzlich möglich ist, die Strukturelemente 51a, 51b, 51c unterschiedlich zu dimensionieren und ungleichmäßig zu verteilen. Zur Vereinfachung der Montage der Bipolarplatte 12 werden die Strukturelemente 51a, 51b, 51c zumindest auf der Kühlmittelseite 42 der Kathodenplatte 40 fixiert, vorzugsweise geklebt.

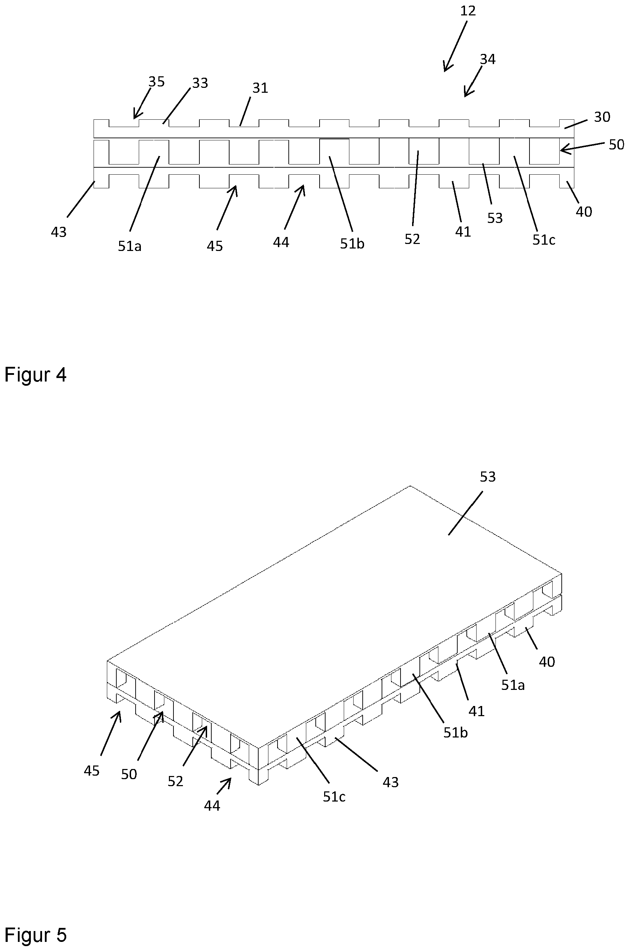

Figur 4 zeigt wiederum ein Detail einer Bipolarplatte 12 nach einer zweiten Ausführungsform im Schnitt. Bei dieser Ausführungsform sind die Strukturelemente 51a, 51b, 51c einstückig mit einer Trägerplatte 53 ausgebildet, die mit der flachen Seite auf der Kühlmittelseite 42 der Kathodenplatte 40 aufliegt. Der Einsatz dieser Trägerplatte 53 erleichtert die Montage der Bipolarplatte 12 deutlich. Auch bei dieser Variante kann ein Fixieren, beispielsweise durch Verkleben der Trägerplatte 53 bzw. der Strukturelemente 51a, 51b, 51c erfolgen.

Die andere Variante, bei der die Seite der Trägerplatte 53, die die Strukturelemente 51a, 51b, 51c trägt, auf der Kühlmittelseite 42 der Kathodenplatte 40 aufliegt, ist in Figur 5 gezeigt. Die nicht dargestellte Anodenplatte 30 wird nach Anordnung der Trägerplatte 53 mit den Strukturelementen 51a, 51b, 51c auf der Kathodenplatte 40 aufgebracht, um die Bipolarplatte 12 zu komplettieren.

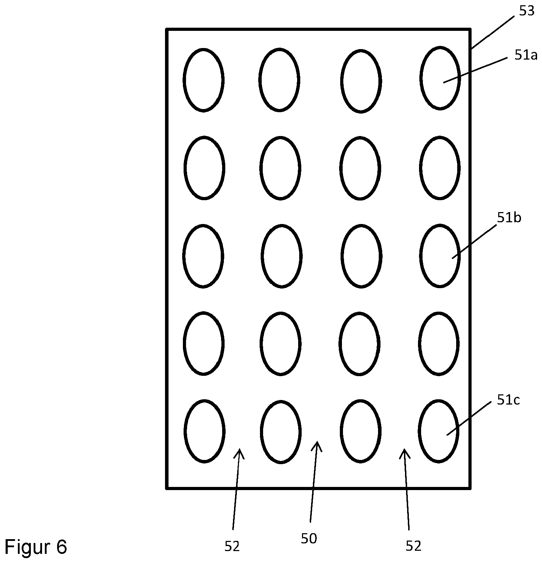

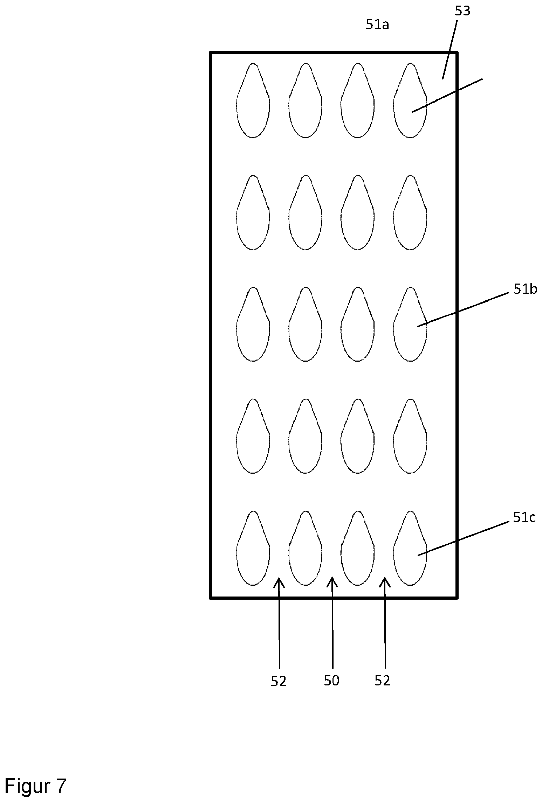

Die Figuren 6 und 7 zeigen jeweils eine Trägerplatte 53 mit darauf aufgebrachten Strukturelementen 51a, 51b, 51c, die einen ovalen Querschnitt mit zwei Symmetrieachsen (Figur 6) und einen Querschnitt mit einer Symmetrieachse (Figur 7). Diese Ausführungsformen dienen zur Optimierung der Strömungsverhältnisse eines Kühlmittels. Diese Querschnitte können auch als erste Strukturierung 33 und/oder zweite Strukturierung 43 gewählt werden.

Sofern nicht explizit angegeben, betreffen die Ausführungen alle Ausführungsformen gleichermaßen.

### Bezugszeichenliste

- 100: Brennstoffzellenstapel

- 10: Membran-Elektroden-Anordnung
- 11: Einzelzelle
- 12: Bipolarplatte
- 18: Endplatte
- 20: Dichtung
- 22: Spannvorrichtung
- 24: länglicher Zugkörper

- 30: Anodenplatte
- 31: Anodenseite
- 32: Kühlmittelseite
- 33: erste Strukturierung
- 34: Anodenflussfeld
- 35: Strömungspfad
- 40: Kathodenplatte
- 41: Kathodenseite
- 42: Kühlmittelseite
- 43: zweite Strukturierung
- 44: Anodenflussfeld
- 45: Strömungspfad

- 50: Kühlmittelflussfeld
- 51a, b, c: Strukturelemente
- 52: Strömungspfad
- 53: Trägerplatte

- A: Einströmbereich
- B: Übergangsbereich
- C: Ausströmbereich
- S: Stapelrichtung

## Patentansprüche

1. Bipolarplatte (12) für eine Brennstoffzelle umfassend:
eine Anodenplatte (30) mit einer Anodenseite (31) und einer Kühlmittelseite (32), wobei auf der Anodenseite (31) eine erste Strukturierung (33) zur Ausbildung eines Anodenflussfelds (34) ausgebildet ist, und
eine Kathodenplatte (40) mit einer Kathodenseite (41) und einer Kühlmittelseite (42), wobei auf der Kathodenseite (41) eine zweite Strukturierung (43) zur Ausbildung eines Kathodenflussfelds (44) ausgebildet ist;
wobei zwischen der Anodenplatte (30) und der Kathodenplatte (40) zur Ausbildung eines Kühlmittelflussfelds (50) Strukturelemente (51a, 51b, 51c) angeordnet sind,
**dadurch gekennzeichnet, dass**
die Strukturelemente (51a, 51b, 51c) aus einem elastischen Material bestehen und
die Strukturelemente (51a, 51b, 51c) im unverbauten Zustand der Bipolarplatte (12) in unterschiedlichen Bereichen des Kühlmittelflussfeldes (50) eine unterschiedliche Höhe aufweisen.

2. Bipolarplatte (12) nach Anspruch 1, **dadurch gekennzeichnet, dass** die Höhe (h) der Strukturelemente (51a, 51b, 51c) umgekehrt proportional ist zur Druckbelastung in den Bereichen des Kühlmittelflussfeldes (50).

3. Bipolarplatte (12) nach Anspruch 1 oder 2, **dadurch gekennzeichnet, dass** die Anodenplatte (30) und die Kathodenplatte (40) aus Metall oder einem leitfähigen kohlenstoffbasierten Material, vorzugsweise Graphit oder einem Kompositmaterial aus Graphit und Kohlenstoff bestehen.

4. Bipolarplatte (12) nach einem der Ansprüche 1 bis 3, **dadurch gekennzeichnet, dass** die Strukturelemente (51a, 51b, 51c) aus einem elastischen Polymer bestehen, wobei zumindest ein Strukturelement (51a, 51b, 51c) elektrisch leitfähig ist.

5. Bipolarplatte (12) nach einem der vorherigen Ansprüche, **dadurch gekennzeichnet, dass** die Strukturelemente (51a, 51b, 51c) säulenförmig sind und vorzugsweise einen rechteckigen oder ovalen Querschnitt aufweisen und beabstandet voneinander angeordnet sind und dass optional die Strukturierungen (33, 43) der Anodenplatte (30) und/oder der Kathodenplatte (40) säulenförmig ausgebildet sind.

6. Bipolarplatte (12) nach einem der vorherigen Ansprüche, **dadurch gekennzeichnet, dass** die erste Strukturierung (33) der Anodenplatte (30) und die zweite Strukturierung (43) der Kathodenplatte (40) in Stapelrichtung (S) übereinander positioniert sind und sich zumindest teilweise mit der Querschnittsfläche der Strukturelemente (51a, 51b, 51c) überschneiden.

7. Bipolarplatte (12) nach einem der vorigen Ansprüche, **dadurch gekennzeichnet, dass** die Strukturelemente (51a, 51b, 51c) unter Ausbildung von Strömungspfaden (52) regelmäßig oder unregelmäßig angeordnet sind.

8. Bipolarplatte (12) nach einem der vorigen Ansprüche, **dadurch gekennzeichnet, dass** die Strukturelemente (51a, 51b, 51c) an zumindest der Anodenplatte (30) oder der Kathodenplatte (40) fixiert sind oder dass die Strukturelemente (51a, 51b, 51c) auf zumindest einer Trägerplatte (53) ausgebildet sind, die entweder an der Anodenplatte (30) oder an der Kathodenplatte (40) anliegend angeordnet ist, wobei diese an der Anodenplatte (30) oder der Kathodenplatte (40) fixiert sein kann.

9. Brennstoffzellenstapel (100), umfassend einen Stapel zwischen zwei Endplatten (18) abwechselnd angeordneter Membran-Elektroden-Anordnungen (10) und Bipolarplatten (12) nach einem der Ansprüche 1 bis 8.

10. Fahrzeug mit einem Brennstoffzellensystem, das einen Brennstoffzellenstapel (100) nach Anspruch 9 aufweist.

## Claims

1. Bipolar plate (12) for a fuel cell, comprising:
an anode plate (30) having an anode side (31) and a coolant side (32), wherein on the anode side (31) is formed a first structuring (33) for forming an anode flow field (34), and
a cathode plate (40) having a cathode side (41) and a coolant side (42), wherein on the cathode side (41) is formed a second structuring (43) for forming a cathode flow field (44);
wherein between the anode plate (30) and the cathode plate (40) are arranged structure elements (51a, 51b, 51c) for forming a coolant flow field (50),
**characterised in that**
the structure elements (51a, 51b, 51c) consist of an elastic material and
the structure elements (51a, 51b, 51c) in the uninstalled state of the bipolar plate (12) have a different height in different regions of the coolant flow field (50).

2. Bipolar plate (12) according to claim 1, **characterised in that** the height (h) of the structure elements (51a, 51b, 51c) is inversely proportional to the pressure load in the regions of the coolant flow field (50).

3. Bipolar plate (12) according to claim 1 or 2, **characterised in that** the anode plate (30) and the cathode plate (40) consist of metal or a conductive carbon-based material, preferably graphite or a composite material of graphite and carbon.

4. Bipolar plate (12) according to any of claims 1 to 3, **characterised in that** the structure elements (51a, 51b, 51c) consist of an elastic polymer, wherein at least one structure element (51a, 51b, 51c) is electrically conductive.

5. Bipolar plate (12) according to any of the preceding claims, **characterised in that** the structure elements (51a, 51b, 51c) are column-shaped and preferably have a rectangular or oval cross-section and are arranged spaced from one another and that optionally the structurings (33, 43) of the anode plate (30) and/or of the cathode plate (40) are column-shaped in design.

6. Bipolar plate (12) according to any of the preceding claims, **characterised in that** the first structuring (33) of the anode plate (30) and the second structuring (43) of the cathode plate (40) are positioned in stack direction (S) one above another and overlap at least partially with the cross-section surface of the structure elements (51a, 51b, 51c).

7. Bipolar plate (12) according to any of the preceding claims, **characterised in that** the structure elements (51a, 51b, 51c) are arranged regularly or irregularly to form flow paths (52).

8. Bipolar plate (12) according to any of the preceding claims, **characterised in that** the structure elements (51a, 51b, 51c) are fixed on at least the anode plate (30) or the cathode plate (40) or that the structure elements (51a, 51b, 51c) are formed on at least one carrier plate (53), which is arranged resting either on the anode plate (30) or on the cathode plate (40), wherein this can be fixed on the anode plate (30) or the cathode plate (40).

9. Fuel cell stack (100), comprising a stack of membrane electrode arrangements (10) and bipolar plates (12) according to any of claims 1 to 8 arranged alternatingly between two end plates (18).

10. Vehicle having a fuel cell system which has a fuel cell stack (100) according to claim 9.

## Revendications

1. Plaque bipolaire (12) pour pile à combustible, comprenant :
une plaque d'anode (30) avec un côté anode (31) et un côté réfrigérant (32), dans laquelle une première structuration (33) permettant de réaliser un champ d'écoulement d'anode (34) est réalisée sur le côté anode (31), et
une plaque de cathode (40) avec un côté cathode (41) et un côté réfrigérant (42), dans laquelle une seconde structuration (43) permettant de former un champ d'écoulement de cathode (44) est réalisée sur le côté cathode (41) ;
dans laquelle des éléments de structure (51a, 51b, 51c) sont agencés entre la plaque d'anode (30) et la plaque de cathode (40) afin de réaliser un champ d'écoulement de réfrigérant (50),
**caractérisée en ce que**,
les éléments de structure (51a, 51b, 51c) consistent en un matériau élastique et
les éléments de structure (51a, 51b, 51c) présentent une hauteur différente dans différentes régions du champ d'écoulement de réfrigérant (50) à l'état non assemblé de la plaque bipolaire (12).

2. Plaque bipolaire (12) selon la revendication 1, **caractérisée en ce que** la hauteur (h) des éléments de structure (51a, 51b, 51c) est inversement proportionnelle à la charge de pression dans les régions du champ d'écoulement de réfrigérant (50).

3. Plaque bipolaire (12) selon la revendication 1 ou 2, **caractérisée en ce que** la plaque d'anode (30) et la plaque de cathode (40) consistent en un métal ou un matériau conducteur à base de carbone, de manière préférée du graphite ou un matériau composite à base de graphite et de carbone.

4. Plaque bipolaire (12) selon l'une quelconque des revendications 1 à 3, **caractérisée en ce que** les éléments de structure (51a, 51b, 51c) consistent en un polymère élastique, dans laquelle au moins un élément de structure (51a, 51b, 51c) est électriquement conducteur.

5. Plaque bipolaire (12) selon l'une quelconque des revendications précédentes, **caractérisée en ce que** les éléments de structure (51a, 51b, 51c) sont en forme de colonne et présentent de manière préférée une section transversale rectangulaire ou ovale et sont agencés à distance les uns des autres, et **en ce que** les structurations (33, 43) de la plaque d'anode (30) et/ou de la plaque de cathode (40) sont éventuellement réalisées en forme de colonne.

6. Plaque bipolaire (12) selon l'une quelconque des revendications précédentes, **caractérisée en ce que** la première structuration (33) de la plaque d'anode (30) et la seconde structuration (43) de la plaque de cathode (40) sont positionnées l'une au-dessus de l'autre dans la direction d'empilement (S) et recouvrent au moins partiellement la surface de section transversale des éléments de structure (51a, 51b, 51c).

7. Plaque bipolaire (12) selon l'une quelconque des revendications précédentes, **caractérisée en ce que** les éléments de structure (51a, 51b, 51c) sont agencés de manière régulière ou irrégulière en réalisant des voies d'écoulement (52).

8. Plaque bipolaire (12) selon l'une quelconque des revendications précédentes, **caractérisée en ce que** les éléments de structure (51a, 51b, 51c) sont fixés à au moins la plaque d'anode (30) ou la plaque de cathode (40), ou **en ce que** les éléments de structure (51a, 51b, 51c) sont réalisés sur au moins une plaque de support (53) qui est agencée de manière à prendre appui sur la plaque d'anode (30) ou la plaque de cathode (40), dans laquelle ladite plaque de support peut être fixée à la plaque d'anode (30) ou à la plaque de cathode (40).

9. Empilement de piles à combustible (100), comprenant un empilement constitué de groupes d'électrodes à membrane (10) et de plaques bipolaires (12) selon l'une quelconque des revendications 1 à 8, agencés de manière alternée entre deux plaques d'extrémité (18).

10. Véhicule avec un système de pile à combustible présentant un empilement de piles à combustible (100) selon la revendication 9.
